# DEMANDE DE BREVET EUROPEEN

(11) **EP 0 736 849 A1**
(43) Date de publication de la demande: **09.10.1996**
(21) Numéro de dépôt: 96400590.4
(22) Date de dépôt: 21.03.1996
(51) Int. Cl.: G07G 1/14, G07G 1/00, G07F 7/02

(54) **Dispositif et procédé de traitement d'informations codées pour code à barres et carte à puce**

(30) Priorité: 07.04.1995 FR 9504162
(71) Demandeur: MARKETLINK, 13856 Aix en Provence Cedex 3 (FR)
(72) Inventeur: Haddad, Aneace, 83460 Les Arcs sur Argens (FR); Chevalier, Bernard, 13008 Marseille (FR)
(74) Mandataire: Benech, Frédéric

(57) **Abrégé**

Il s'agit d'un dispositif et d'un procédé de traitement d'informations codées. Le dispositif comprend des moyens (6, 9) de lecture de données codées dans une carte (7) à puce, des moyens (2) lecteurs de code à barres (3) reproduits sur un article et des moyens (10) de comparaison entre les informations lues et des informations stockées concernant une série d'articles prédéterminés. Il comprend également des moyens de traitement des résultats de ces comparaisons et des moyens (10) d'écriture dans la mémoire de la carte à puce, d'informations issues d'une part des résultats de ces comparaisons et d'autre part de la date d'achat, les moyens de lecture de données et d'écriture d'informations dans la carte à puce étant prévus pour au moins deux types de carte (7) à puce différents et comportant des moyens d'identification des spécificités et d'acceptation ou de rejets des cartes à puce en fonction desdites spécificités.

## Description

La présente invention concerne un dispositif de traitement d'informations codées, lors de l'achat d'un article dans un magasin de détail, du type comprenant des moyens de lecture de données codées dans une carte à puce, des moyens lecteurs de code à barres reproduit sur l'article, des moyens de stockage d'informations codées concernant un ou plusieurs articles, des moyens de comparaison entre les informations lues par les moyens lecteurs de code à barres et des informations stockées dans lesdits moyens de stockage et concernant une série d'articles prédéterminés, des moyens de traitement des résultats de ces comparaisons et des moyens agencés pour imprimer automatiquement une facture, commandés par lesdits moyens de traitement des résultats.

Elle concerne également un procédé mettant en oeuvre un tel dispositif.

La présente invention trouve une application particulièrement importante, bien que non exclusive, dans le domaine du traitement des cartes de fidélité, présentées au moment du paiement par les clients des magasins de détail, tels que les hypermarchés et supermarchés.

On connaît déjà des systèmes de traitement de telles cartes. Ceux-ci demandent la mise en place d'un dispositif distinct et sur mesure, pour chaque carte traitée, et pour chaque modèle et marque de caisse traitant la carte. De tels systèmes présentent de ce fait des inconvénients. Ils engendrent en effet des applications figées difficiles à modifier, et ne permettent pas d'assurer un fonctionnement homogène.

On connaît également de tels dispositifs développés notamment dans le domaine bancaire, fonctionnant avec des cartes à puces. Ce type de dispositif est de portée limitée et ne permet pas, notamment, de modifier le contenu de la carte en fonction des informations issues du lecteur de codes à barres.

La présente invention vise à fournir un dispositif et procédé répondant mieux que ceux antérieurement connus aux exigences de la pratique, notamment en ce qu'elle est facilement adaptable aux protocoles et équipements existants, en ce qu'elle permet de gérer de manière uniforme un environnement composé de lecteurs de codes à barres et de lecteurs de cartes à puces différents, tout en mettant en oeuvre des algorithmes simples.

Dans ce but l'invention propose notamment un dispositif de traitement d'informations codées, lors de l'achat d'un article dans un magasin, du type ci-dessus défini, caractérisé en ce que il comporte des moyens d'écriture dans la mémoire de la carte à puce d'informations issues d'une part des résultats des comparaisons entre les informations codées du code à barres et des informations concernant une série d'articles déterminés, et d'autre part de la date d'achat,
et en ce que les moyens de lecture de données et d'écriture d'informations dans la carte à puce sont prévus pour au moins deux types de carte à puce différents et comportent des moyens d'identification des spécificités et d'acceptation ou de rejets desdites cartes à puce en fonction desdites spécificités.

Grâce à l'invention, le système d'encaissement du magasin de détail va permettre, lorsque la caissière insère la carte dans les moyens de lecture de cartes à puce, de lire le contenu de la carte, d'analyser la liste des codes à barres des articles achetés par le client et de les comparer avec les informations codifiées, en appliquant le ou les algorithmes de sélection établis au travers du protocole revendiqué.

Les informations ainsi retenues sont enregistrées dans un fichier spécifique de la mémoire de la carte à puce, par exemple désigné par le protocole en fonction de la nature physique de la carte (taille de sa mémoire, type de processeurs, version, etc.).

L'invention permet ainsi d'homogénéiser et de simplifier le traitement des cartes à puce dans un environnement technique complexe, comportant un nombre important de périphériques matériels et logiciels hétérogènes comme c'est le cas d'un magasin de détail comprenant plusieurs terminaux sur différents sites de caisse de sorties de clients, chacun muni de moyens lecteurs de codes à barres d'articles.

Dans des modes de réalisation avantageux on a de plus recours à l'une et/ou à l'autre des dispositions suivantes :
- le dispositif comporte des moyens de commande permettant de déclarer les spécifications des actions à effectuer sur le contenu de la mémoire de la carte à puce suite à la lecture du code à barres ;
- les moyens de commande permettant de déclarer les spécifications des actions à effectuer sont agencés pour vérifier la validité de la commande dans le contexte de l'achat qui vient d'être effectué ;
- les moyens de commande permettant de déclarer les spécifications des actions à effectuer sont agencés pour ajouter des informations additionnelles à la mémoire de la carte à puce en fonction de l'absence d'un ou plusieurs articles dans l'achat qui vient d'être effectué ;
- les moyens de commande permettant de déclarer les spécifications des actions à effectuer sont agencés pour permettre d'ajouter des informations aux mémoires de toute carte présentée dont les spécificités sont acceptées.

L'invention propose également un procédé de traitement d'informations codées, lors de l'achat d'un article dans un magasin de détail, selon lequel
- on lit des données codées dans une carte à puce,
- on lit un code à barres reproduit sur l'article acheté,
- on compare les informations lues avec des informations stockées dans des moyens de stockage et concernant des séries d'articles prédéterminés à acheter,
- on traite les résultats de ces comparaisons pour imprimer automatiquement une facture,
- et on imprime automatiquement une facture, à partir desdits résultats, caractérisé
en ce que on écrit des informations issues d'une part des résultats de ces comparaisons et d'autre part de la date d'achat dans la mémoire de la carte à puce, et en ce que on lit les données et on écrit les informations dans la carte à puce pour au moins deux types de carte à puce différents, après identification des spécificités et acceptation ou non desdites cartes à puce en fonction desdites spécificités.

Avantageusement lors du traitement desdites informations codées, on déclare les spécifications des actions à effectuer sur le contenu de la mémoire de la carte à puce suite à la lecture du code à barres.

Dans un mode de réalisation avantageux, on déclare les spécifications des actions à effectuer, et on ajoute des informations additionnelles au contenu de la mémoire de la carte à puce en fonction de l'absence d'un ou plusieurs articles dans l'achat qui vient d'être effectué.

Egalement avantageusement on déclare les spécifications des actions à effectuer et on ajoute des informations additionnelles aux mémoires de toutes cartes présentées dont les spécificités sont acceptées.

L'invention sera mieux comprise à la lecture de la description qui suit d'un mode particulier de réalisation, donnée à titre d'exemple non limitatif.

La description se réfère au dessin qui l'accompagne dans lequel la figure unique montre un schéma général d'un dispositif 1 selon le mode de réalisation de l'invention plus particulièrement décrit ici, comprenant un lecteur 2 de code à barres 3, par exemple via un stylo optique 4.

Le code à barres 3 sert à identifier un article 5 de façon connue en elle-même.

Le dispositif 1 comprend un boîtier 6 dans lequel peut être insérée une carte 7 à puce 8 reliée à un circuit 9 de lecture/écriture dans la mémoire de la puce.

Le lecteur 2 de code à barres et le circuit 9 de lecture/écriture sont reliés à des moyens 10 de traitement par exemple constitués par un micro-ordinateur connecté à une mémoire 11 de masse agencée pour stocker des données concernant une série d'articles prédéterminés, et à une caisse 12 enregistreuse et imprimante de facture.

Les moyens 10 de traitement sont par ailleurs reliés à des moyens (non représentés) situés entièrement à distance du site où est implanté le dispositif 1 et agencés pour assurer la cohérence des informations traitées et collectées par différents dispositifs et effectuer la compensation entre les données venant des différents sites.

Plus précisément, l'invention met en oeuvre un protocole composé d'un procédé de codification de commandes, et des algorithmes déclenchés par l'insertion de la carte 7 à puce dans le boîtier 6.

Ces algorithmes exécutent les commandes en fonction des informations venant du lecteur 2 de codes à barres et du circuit 9 de lecture/écriture, de la mémoire de la carte.

Les algorithmes mentionnés ci-dessus vont être donnés plus précisément ci-après.

La syntaxe générale du protocole utilisée dans le mode de réalisation de l'invention plus particulièrement décrit ici commence par une commande (un mot réservé), suivie par une liste de paramètres séparés, par exemple, par des points virgules.

A titre d'exemple, il est présenté ci-après l'utilisation de l'invention dans le cadre d'une gestion de promotions.

La commande CARTE permet de déclarer les spécificités de chaque carte à puce acceptée par le système.

La syntaxe de commande CARTE est par exemple la suivante :
*CARTE Version;Masque;RépCpns;FichCpns; CpnsMaxi; RépPoints;FichPoints*
- *Version* est le numéro de version de la carte, unique pour chaque commande CARTE.
- *Masque* est le nom du système opératif de la carte, différent pour chaque fournisseur de cartes.
- *RépCpns* est le nom du répertoire, dans la mémoire de la carte, qui contient le fichier des promotions.
- *FichCpns* est le nom du fichier des promotions, dans la mémoire de la carte.
- *CpnsMaxi* est le nombre maximum de coupons que la carte peut contenir.
- *RépPoints* est le nom du répertoire qui contient le fichier des points.
- *FichPoints* est le nom du fichier des points.

La commande PROMO permet quant-à-elle de déclarer les spécifications des actions à effectuer sur la mémoire de la carte suite à la lecture d'un code à barres.

La syntaxe de la commande PROMO est la suivante :
*PROMO Version;SfDécl;CodePromo;Desc1;Desc2;Montant; Début;Fin;PanierMini;Durée [;CodeEAN;Codesf;Option]*

*Version* est le numéro de version des cartes ciblées par cette commande.

*SfDécl* est le code sous-famille déclenchant l'offre. Ce paramètre désigne la sous-famille d'articles qui déclenchera l'activation de la promotion.

Note : Arbitrairement, les codes 900 et 901 nécessitent un traitement spécifique. Le code 900 représente un coupon distribué aux seuls clients n'ayant pas acheté le produit en promotion. Le code 901 représente un coupon distribué de manière non sélective, à tout porteur de la carte.

*CodePromo* est le code promotion, unique pour chaque promotion.

*Desc1,Desc2* sont les descriptions de la promotion.

*Montant* est le montant de la réduction, en centimes, ou en points.

*Début* est la date de début de promotion, date à partir de laquelle la promotion commencera à être écrite sur les cartes.

*Fin* est la date de fin de promotion date à partir de laquelle la promotion ne sera plus diffusée.

*PanierMini* est le montant minimum du panier en francs, seuil en dessous duquel la promotion ne sera pas activée.

*Durée* est la durée de vie du coupon en jour (0/15/30/45). Si la durée de vie est de 0 jours, des points seront distribués, au lieu de coupons.

*CodeEAN* est le code EAN de l'article(s) en promotion. Le code EAN peut contenir la lettre "X" dans une ou plusieurs positions, la promo sera donc valable pour plusieurs articles ayant la même structure de base, à un ou plusieurs chiffres près, appartenant tous à la sous-famille indiquée.

*CodeSf* est le code sous-famille de l'article(s) en promo.

*Option* est l'option fidélisation/nouveau client. Si cette valeur est "M" (pour [M]ême produit), le client recevra ce bon de réduction si l'EAN acheté est identique à l'EAN en promotion. Si la valeur est "A" ([A]utres produits), le client recevra ce bon de réduction si l'EAN acheté est différent de l'EAN en promotion. Si la valeur est I, l'option est inactivée.

Les 3 derniers paramètres (CodeEAN, CodeSf, Option) peuvent être omis ; dans ce cas, la promotion porte sur un achat global, et non pas sur un article précis.

Concernant le fonctionnement, pour chaque article scanné ayant une sous-famille, l'algorithme appelé "émission par déclenchement" est effectué.

Cet algorithme recherche les commandes PROMO ayant comme valeur SfDécl la valeur de la sous-famille de l'article scanné, puis vérifiera la validité de la commande dans le contexte de l'achat qui vient d'être effectué :
- l'enregistrement doit être valable au jour de la transaction,
- le montant total de la transaction doit être supérieur à *PanierMini,*
- *Option =* "I", ou *Option =* "M" et l'EAN scanné = *CodeEAN,* ou *Option =* "A" et les 6 premiers caractères de l'EAN scanné sont différents de ceux de *CodeEAN.*

Si ces conditions sont satisfaites, l'enregistrement est alors ajouté à la carte.

De manière semblable, l'algorithme appelé "émission par omission" permet d'ajouter des enregistrements à une carte, en fonction de l'absence d'un ou plusieurs articles dans l'achat qui vient d'être effectué. Ces enregistrements sont désignés par des commandes PROMO avec le paramètre *SfDécl* ayant la valeur "900".

De manière semblable, l'algorithme appelé "émission non sélective" permet d'ajouter des enregistrements à toute carte présentée. Ces enregistrements sont désignés par des commandes PROMO avec le paramètre *SfDécl* ayant la valeur "901".

Les algorithmes mentionnés ci-dessus sont donnés plus précisément ci-après :

### Algorithme d'émission par déclenchement :

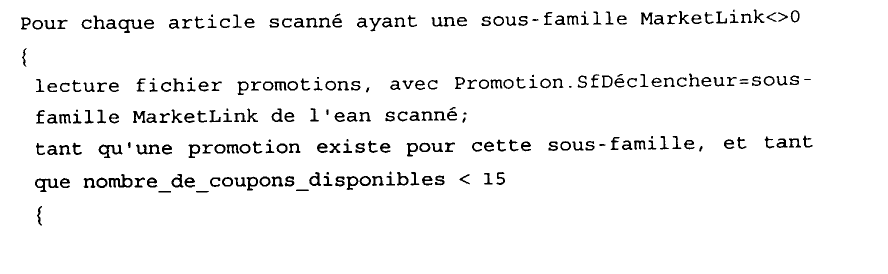

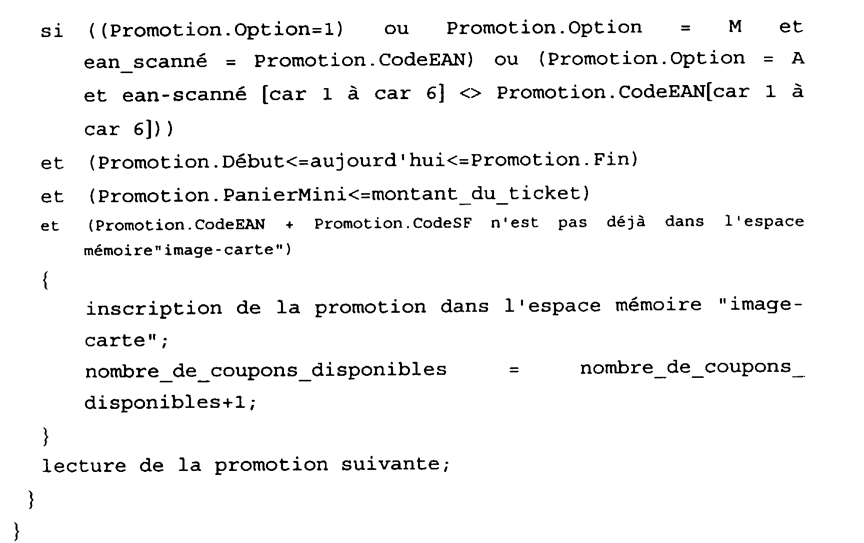

### Algorithme d'émission par omission :

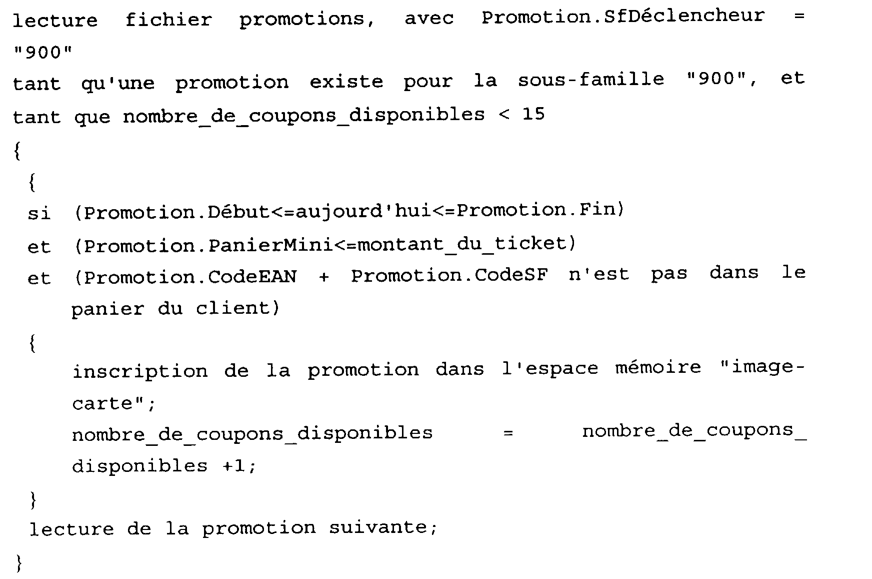

### Algorithme d'émission non sélective :

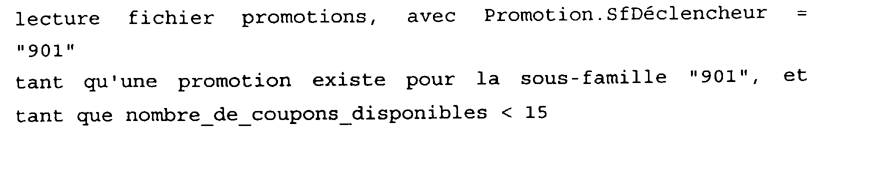

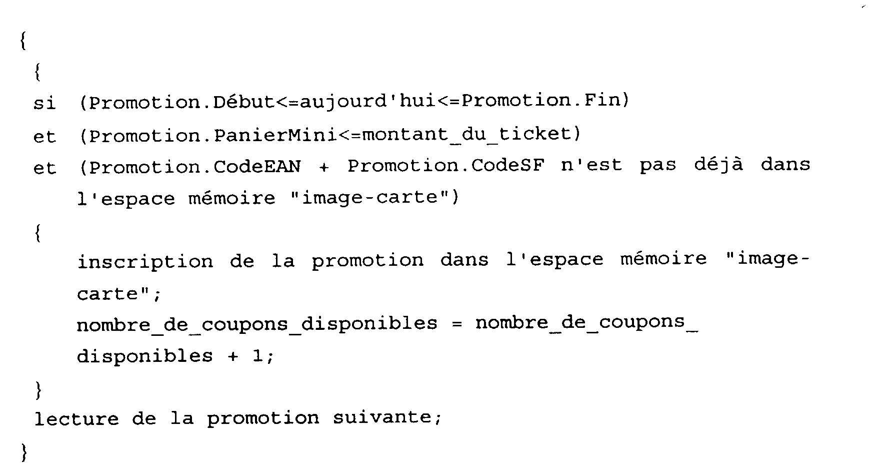

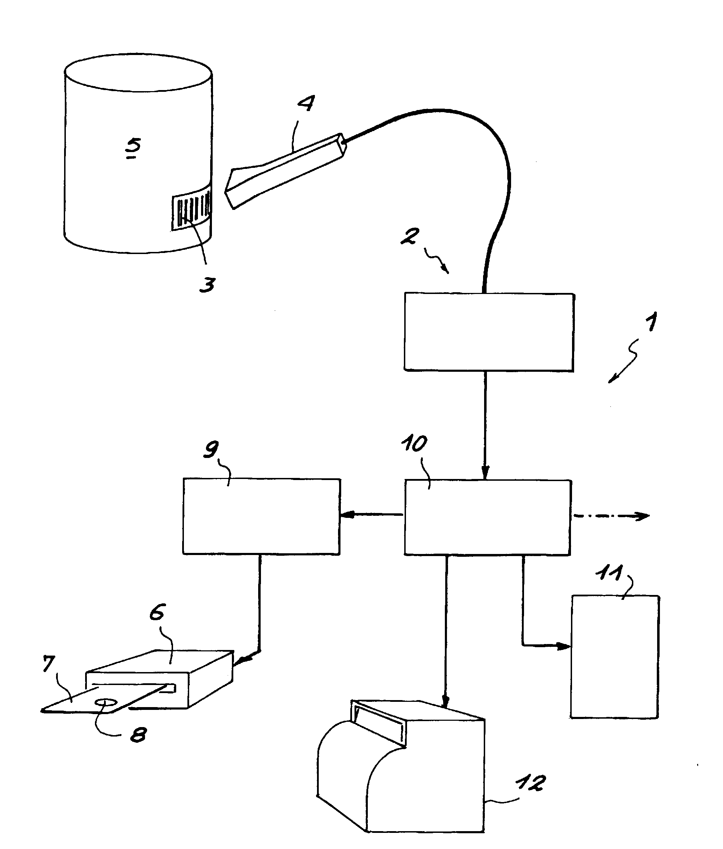

On va maintenant décrire le fonctionnement du dispositif 1 de la figure 1.

Une carte de fidélité 7 est présentée à la caissière afin de recevoir des bons de réduction et accumuler des points. Lorsque le porteur achète un article 5 pour lequel il détient un bon de réduction sur sa carte, la valeur de la réduction est automatiquement déduite de son ticket. De plus, le porteur peut choisir de régler son achat avec le solde de points qu'il a accumulés sur sa carte, sur la base de 1 point égale 1 franc.

Les bons de réduction sont émis de manière sélective, en fonction des achats du porteur. Une campagne promotionnelle peut, par exemple, proposer un bon de réduction de 5 francs, à valoir sur un prochain achat de balles de tennis de la marque X. Plutôt que de proposer ce bon à tous les porteurs, la marque X choisira de le donner aux seuls porteurs achetant, par exemple, une raquette de tennis.

Les points sont également émis de manière sélective. Par exemple, une marque de chaussures Y offre 50 points aux acheteurs de ses chaussures de sport.

Grâce à l'invention, il devient possible de gérer cette sélectivité. Le système d'encaissement reçoit les caractéristiques des promotions et les intègre au niveau de chaque caisse. Une promotion donnée sera déclenchée lorsqu'un code EAN déclencheur est lu par le scanner de la caisse.

L'environnement comprend ainsi des fonctions intégrant les algorithmes de l'invention qui sont directement utilisables par un système d'encaissement programmé, par exemple, en langage C.

Comme il va de soit et comme il résulte d'ailleurs de ce qui précède, la présente invention ne se limite pas au mode de réalisation plus particulièrement décrit mais en embrasse toutes les variantes.

## Revendications

1. Dispositif (1) de traitement d'informations codées, lors de l'achat d'un article (5) dans un magasin de détail, comprenant
- des moyens (6, 9) de lecture de données codées dans une carte (7) à puce,
- des moyens (2) lecteurs de code à barres (3) reproduits sur l'article,
- des moyens (11) de stockage d'informations codées concernant un ou plusieurs articles,
- des moyens (10) de comparaison entre les informations lues par les moyens lecteurs de code à barres et des informations stockées dans lesdits moyens de stockage et concernant une série d'articles prédéterminés,
- des moyens de traitement des résultats de ces comparaisons,
- et des moyens (12) agencés pour imprimer automatiquement une facture (13), commandés par lesdits moyens de traitement desdits résultats, caractérisé
en ce que il comporte des moyens (10) d'écriture dans la mémoire de la carte à puce, d'informations issues d'une part des résultats de ces comparaisons et d'autre part de la date d'achat.
et en ce que les moyens de lecture de données et d'écriture d'informations dans la carte à puce sont prévus pour au moins deux types de carte (7) à puce différents et comportent des moyens d'identification des spécificités et d'acceptation ou de rejets desdites cartes à puce en fonction desdites spécificités.

2. Dispositif selon la revendication 1, caractérisé en ce que il comporte des moyens (10) de commande permettant de déclarer les spécifications des actions à effectuer sur le contenu de la mémoire de la carte à puce suite à la lecture du code à barres.

3. Dispositif selon la revendication 2, caractérisé en ce que les moyens (10) de commande permettant de déclarer les spécifications des actions à effectuer sont agencés pour vérifier la validité de la commande dans le contexte de l'achat qui vient d'être effectué.

4. Dispositif selon l'une quelconque des revendications 2 et 3, caractérisé en ce que les moyens (10) de commande permettant de déclarer les spécifications des actions à effectuer sont agencés pour ajouter des informations additionnelles à la mémoire de la carte à puce en fonction de l'absence d'un ou plusieurs articles dans l'achat qui vient d'être effectué.

5. Dispositif selon l'une quelconque des revendications 2, 3 et 4, caractérisé en ce que les moyens (10) de commande permettant de déclarer les spécifications des actions à effectuer sont agencés pour permettre d'ajouter des informations aux mémoires de toute carte présentée dont les spécificités sont acceptées.

6. Procédé de traitement d'informations codées, lors de l'achat d'un article (5) dans un magasin de détail, selon lequel
- on lit des données codées dans une carte (7) à puce,
- on lit un code à barres (3) reproduit sur l'article acheté,
- on compare les informations lues avec des informations stockées dans des moyens de stockage et concernant des séries d'articles prédéterminés à acheter,
- on traite les résultats de ces comparaisons pour imprimer automatiquement une facture (13),
- et on imprime automatiquement une facture, à partir desdits résultats, caractérisé
en ce qu'on écrit des informations issues d'une part des résultats de ces comparaisons et d'autre part de la date d'achat dans la mémoire de la carte à puce, et en ce que on lit les données et on écrit les informations dans la carte à puce pour au moins deux types de carte à puce différents, après identification des spécificités et acceptation ou non desdites cartes (7) à puce en fonction desdites spécificités.

7. Procédé selon la revendication 6, caractérisé en ce que on déclare les spécifications des actions à effectuer sur le contenu de la mémoire de la carte (7) à puce suite à la lecture du code à barres (3).

8. Procédé selon l'une quelconque des revendications 6 et 7, caractérisé en ce que on déclare les spécifications des actions à effectuer, et on ajoute des informations additionnelles au contenu de la mémoire de la carte à puce en fonction de l'absence d'un ou plusieurs articles (5) dans l'achat qui vient d'être effectué.

9. Procédé selon l'une quelconque des revendications 6 à 8, caractérisé en ce que on déclare les spécifications des actions à effectuer et on ajoute des informations additionnelles aux mémoires de toute carte (7) présentée dont les spécificités sont acceptées.
